# EUROPEAN PATENT SPECIFICATION

(11) **EP 1 849 577 B1**
(45) Date of publication and mention of the grant of the patent: **22.05.2013**
(21) Application number: 05805984.1
(22) Date of filing: 08.11.2005
(51) Int. Cl.: B29C 45/14

(54) **PROCESS FOR PRODUCTION OF HEAT-RESISTANT HOLLOW ARTICLES MADE OF POLYLACTIC ACID-CONTAINING RESIN**
VERFAHREN ZUR HERSTELLUNG VON WÄRMEBESTÄNDIGEN HOHLKÖRPERN AUS POLYMILCHSÄURE ENTHALTENDEM HARZ
PROCEDE DE FABRICATION D`ARTICLES CREUX RESISTANTS A LA CHALEUR EN RESINE CONTENANT UN ACIDE POLYLACTIQUE

(30) Priority: 26.01.2005 JP 2005017584
(43) Date of publication of application: 31.10.2007
(73) Proprietor: Matsuoka, Toshitaka, Tokyo 1110042 (JP); Komatsu, Michio, Iwaki-shi, Fukushima 972-8301 (JP)
(72) Inventor: Matsuoka, Toshitaka, Tokyo 1110042 (JP); Komatsu, Michio, Iwaki-shi, Fukushima 972-8301 (JP)
(74) Representative: Henkel, Breuer & Partner
(86) International application number: PCT/JP2005/020472
(87) International publication number: WO 2006/080125

(56) References cited:
- EP-A1- 1 460 107
- WO-A1-03/022927
- DE-U1- 29 708 297
- JP-A- 1 146 719
- JP-A- 1 146 719
- JP-A- 11 333 858
- JP-A- 11 333 858
- JP-A- 2004 204 143
- JP-A- 2004 204 143
- JP-A- 2004 277 706
- JP-A- 2004 277 706

## Description

### Technical Field

The present invention relates to a process for production of heat-resistant hollow articles made of polylactic acid containing resin.

### Background Art

In recent years, the use of food containers, such as bowls, cups and trays, which are made of biodegradable resin, has been examined in restaurants, cafeterias and the like. Because the food containers which are made of biodegradable resin are degraded by the action of microorganisms in soil and the like after being discarded, it is possible to reduce the burden to the environment.

Polylactic acid has hitherto been known as the above-described biodegradable resin. However, the polylactic acid has low heat resistance. Therefore, when the polylactic acid is used to make food containers, this poses the problem that the food containers cannot withstand hot water pouring, heating by a microwave oven, washing at temperatures on the order of 70 °C in an alkali detergent and rinsing for the reuse of food containers through recovery after use, high-temperature drying and sterilization treatment at temperatures on the order of 80 °C.

There are known biodegradable resin compositions that contain not less than 50% polylactic acid by mass and are nanocomposites of an inorganic filler as biodegradable resin compositions to solve the above-described problem (refer to Japanese Patent Laid-Open No. 2004-204143, for example). Excellent heat resistance can be imparted to the above-described biodegradable resin compositions by crystallization at temperatures near 110 °C without relying on stretching, and the above-described food containers can be formed by injection molding.

In forming a hollow article such as the above-described food containers by the injection molding of the biodegradable resin composition, for example, a mold that comprises a female mold portion having a concavity of a shape fitting the outer shape of the hollow article and a male mold portion having a convexity fitting the inner shape of the hollow article and opposed to the concavity, is heated to 110 °C, for example, and the biodegradable resin composition in a molten state is injected into a cavity enclosed by the concavity and the convexity. And after the injected biodegradable resin composition becomes solidified and forms the hollow article, the hollow article is taken out by opening the mold.

However, there is a fear that if taken out of the mold in an insufficiently cooled condition, an injection-molded product formed from the above-described biodegradable resin composition may be deformed because of insufficient rigidity and the shape of the injection-molded product may be lost. Also, an injection-molded product formed from the above-described biodegradable resin composition contracts if excessively cooled during solidification and tends to adhere to the above-described male mold portion, and during the opening of the mold, there may sometimes be a case where the injection-molded product cannot be easily released from the male mold portion, though easily released from the female mold portion.

Therefore, an investigation is being made into a method that involves detecting the temperature of the mold thereby to indirectly measure the temperature of the biodegradable resin composition injected into the cavity, and taking out the hollow article by opening the mold when the temperature of an injection-molded product made of the biodegradable resin composition has reached temperatures in such a range that there is no fear that the shape of the injection-molded product might be lost and the injection-molded product becomes capable of being released from the male mold portion.

Because indirect measurement of the temperature of the biodegradable resin composition from the temperature of the mold produces large errors and is also susceptible to the effect of the outside air and the like, it is impossible to accurately grasp the temperature of the biodegradable resin composition. This results in the inconvenience that it is difficult to open the mold at temperatures in an appropriate range.

WO 03/022927 A1 discloses a biodegradable resin composition for molding and molded objects obtained by molding the same where the resin composition comprises at least 50 parts by weight of a polylactic acid having a melting point of 160°C or higher, 100 parts by weight of biodegradable polyester resin having a melt flow rate as measured at 190°C under a load of 21.2 N of 0.1 to 50g/10min, and 0.1 to 20 parts by weight of a phyllosilicate having, between sheets thereof, primary, secondary or tertiary amine salt, quaternary ammonium salt, or phosphonium salt bonded by ionic bonding. The articles formed by the described process are released from the mold after complete solidification.

EP-A-1460107 discloses polylactic acid-based resin compositions, molded articles and a process for producing the same. The polylactic acid-based resin composition is melted and filled into a molding machine set in a temperature range of not more than the crystallization-initiating point nor less than the glass transition point so that the composition is molded under crystallization. Thus, a molded object is cooled in the mold to a temperature that is equal to or more than the glass transition temperature.

JP-A-2004-204143 discloses another biodegradable polyester resin composition for forming sheets, pipes, food containers, blister pack containers or other containers for various fluids but does not describe particular parameters for the forming process or temperatures/conditions at which a formed article is to be removed from a mold.

### Disclosure of the Invention

To eliminate the above inconvenience, the present invention has as its object the provision of a process for production of heat-resistant hollow articles that enables a mold to be opened when the temperature of a biodegradable resin composition injected into a cavity reaches temperatures in an appropriate range and does not cause an injected-molded product to be deformed or to be incapable of being taken out of the mold.

To achieve the above object, the present invention provides a process as defined by claim 1 for production of a heat-resistant hollow article made of a polylactic acid containing resin.

The mold used in the production process of the present invention comprises a female mold portion having a concavity of a shape fitting the outer shape of the hollow article, a male mold portion having a convexity fitting the inner shape of the hollow article that is opposed to the concavity, and a stripper plate which is arranged along the periphery of the male mold portion and has an edge-forming part having a shape fitting an edge of the hollow article. In the mold, a cavity enclosed by the concavity, the convexity and the edge-forming part is formed.

Incidentally, in this specification, the term "hollow article" means an injection-molded product that comprises a bottom portion and a peripheral wall portion that is continuous with the bottom and rises from the bottom portion. Examples of such a hollow article include tableware, such as bowls and cups, cosmetic containers, such as lipstick containers, chemicals containers, caps of containers, beverage bottles (except PET bottles formed by blow molding), sealable containers, such as Tupperware (registered trademark), food packing containers for microwave oven, and heat-resistant containers for electronic device.

In the production process of the present invention, first, the mold is heated so that the surface of the mold facing the cavity reaches the crystallization temperature of the polylactic acid containing resin. A biodegradable resin composition containing not less than 50% polylactic acid by mass is used as the polylactic acid containing resin. The crystallization temperature is a temperature in the range of 100 to 120 °C.

Next, the polylactic acid containing resin in a molten state is injected into the cavity with which the temperature of the surface of the cavity is heated to the crystallization temperature. The polylactic acid containing resin is solidified by being cooled in the cavity, whereby the hollow article is formed. At this time, the polylactic acid containing resin is crystallized as the temperature of the polylactic acid containing resin is maintained at the temperature of the surface of the mold, and heat resistance is imparted to the polylactic acid containing resin.

Next, when the injected polylactic acid containing resin has been solidified and the hollow article has been formed, the mold is opened by moving the male mold portion in the direction in which the mold is spaced from the female mold portion. In the production process of the present invention, the judgment of the solidification of the polylactic acid containing resin and the formation of the hollow article is made by measuring the temperature of the polylactic acid containing resin injected into the cavity by use of an infrared temperature sensor provided in a position facing the cavity. And when the temperature of the polylactic acid containing resin measured by the infrared temperature sensor has become a temperature in the range between the temperature at which heat resistance exhibits itself in the hollow article and the temperature at which the hollow article cannot be released from the mold, it is judged that the polylactic acid containing resin has been solidified and that the hollow article has been formed, and the mold is opened as described above.

At this time, the hollow article adheres to the male mold portion due to the contraction associated with the solidification of the polylactic acid containing resin, though the hollow article is not incapable of being released from the mold. The hollow article cannot be easily released from the male mold portion although the hollow article is easily released from the female mold portion. Therefore, when the male mold portion has been moved in the direction in which the male mold portion is spaced from the female mold portion, by introducing gas into between the inner surface of the hollow article and the convexity of the male mold portion, the inner surface of the hollow article adhering to the male mold portion is released from the convexity of the male mold portion. The inner surface of the hollow article can be released from the convexity of the male mold portion, for example, by ejecting compressed air along the peripheral edge of the male mold portion.

Next, when the hollow article has been released from the convexity of the male mold portion, the hollow article is taken out of the mold by advancing the stripper plate in the direction of the hollow article.

According to the production process of the present invention, the judgment of the solidification of the polylactic acid containing resin and the formation of the hollow article is made by directly measuring the temperature of the polylactic acid containing resin injected into the cavity by use of the infrared temperature sensor. Therefore, it is possible to detect the temperature of the polylactic acid containing resin with high accuracy without being affected by the atmosphere, such as the outside air temperature, and it is possible to open the mold in an appropriate range between the temperature at which heat resistance exhibits itself in the hollow article and the temperature at which the hollow article cannot be released from the mold.

As a result of this, according to the production process of the present invention, it is possible to manufacture the hollow article without the deformation of the hollow article or the incapability of being taken out from the mold in the withdrawal of the hollow article from the mold. Because the hollow article obtained as described above is made of the polylactic acid containing resin that has been crystallized by being heated to the crystallization temperature, the hollow article has excellent heat resistance and can be favorably used in applications that require hot water pouring, heating by a microwave oven, heat treatment for repeated uses, and the like.

In the production process of the present invention, the infrared temperature sensor can be favorably used as an infrared temperature sensor for receiving infrared rays generated by a polylactic acid containing resin injected into the cavity by use of an infrared receiver via an optical fiber and detecting the temperature of the resin from the quantity of energy that the infrared rays have.

The interior of the cavity is dark and there is no source of generation of infrared rays except the polylactic acid containing resin. Therefore, according to the infrared temperature sensor, it is possible to detect the temperature of the polylactic acid containing resin in the cavity with high accuracy.

It is preferred that the infrared temperature sensor is provided at a position facing the cavity in one or more parts selected from a part that forms the convexity of the male mold portion, a part that forms the concavity of the female mold portion, a part capable of detecting the temperature of the polylactic acid containing resin located in the gate, a part that is finally filled with the polylactic acid containing resin in a molten state and a part of the convexity of the cavity to which the hollow article adheres.

The infrared temperature sensor is disposed in each of the part that forms the convexity of the male mold portion, the part that forms the concavity of the female mold portion, and the part capable of detecting the temperature of the polylactic acid containing resin located in the gate and detects the temperature of the polylactic acid containing resin in the parts, whereby sufficient heat resistance can be positively obtained in each of the above-described parts. Also, the infrared temperature sensor is disposed in the part that is filled with the polylactic acid containing resin in a molten state at the last moment and detects the temperature of the polylactic acid containing resin in this part, whereby sufficient heat resistance can be positively obtained even when the hollow article has a small wall thickness. Furthermore, the infrared temperature sensor is disposed in the part of the convexity of the male mold portion to which the hollow article adheres and detects the temperature of the polylactic acid containing resin in this part, whereby the hollow article can be positively taken out without the incapability of being released from the mold and sufficient heat resistance can be positively obtained.

The infrared temperature sensor may be disposed in only one of the above-described places or may be disposed in a plurality of the places.

### Brief Description of the Drawings

Figure 1(a) is a perspective view of a hollow article in one embodiment of the present invention;
Figure 1(b) is a sectional view taken along the line I-I of Figure 1(a);
Figure 2 is an explanatory sectional view that shows the manufacturing process of a hollow article in one embodiment of the present invention;
Figure 3 is an explanatory sectional view that shows the manufacturing process of a hollow article in one embodiment of the present invention;
Figure 4 is a graph that shows the endothermic properties of a polylactic acid containing resin used in the present invention;
Figure 5 is a system configuration diagram that shows the construction of an infrared temperature sensor;
Figure 6 is a graph that shows changes with time in the temperature of a polylactic acid containing resin within a cavity measured by the infrared temperature sensor shown in Figure 5;
Figure 7 is an explanatory sectional view that shows the manufacturing process of food containers in one embodiment of the present invention; and
Figure 8 is an explanatory sectional view that shows the manufacturing process of food containers in one embodiment of the present invention.

### Best Mode for Carrying Out the Invention

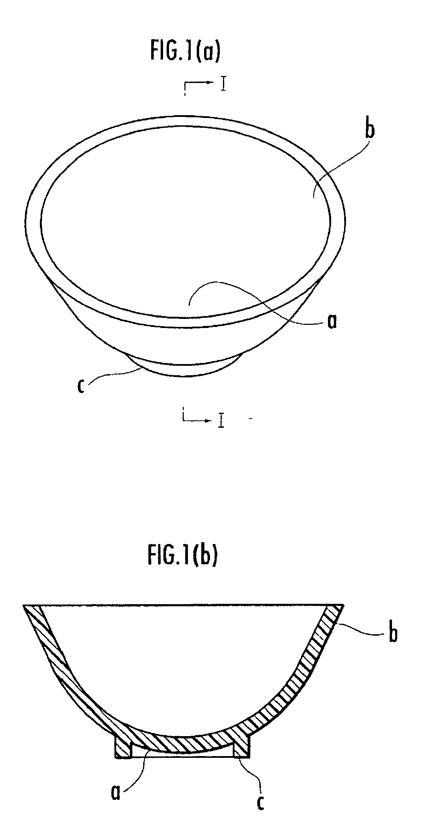

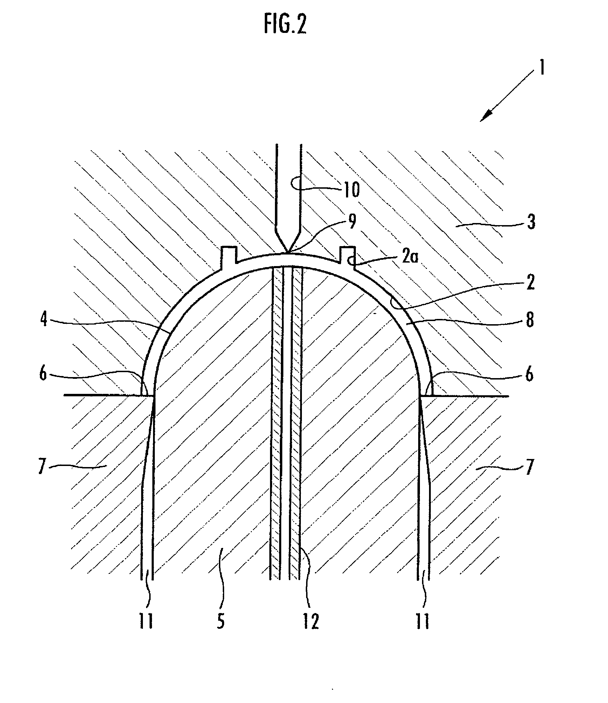

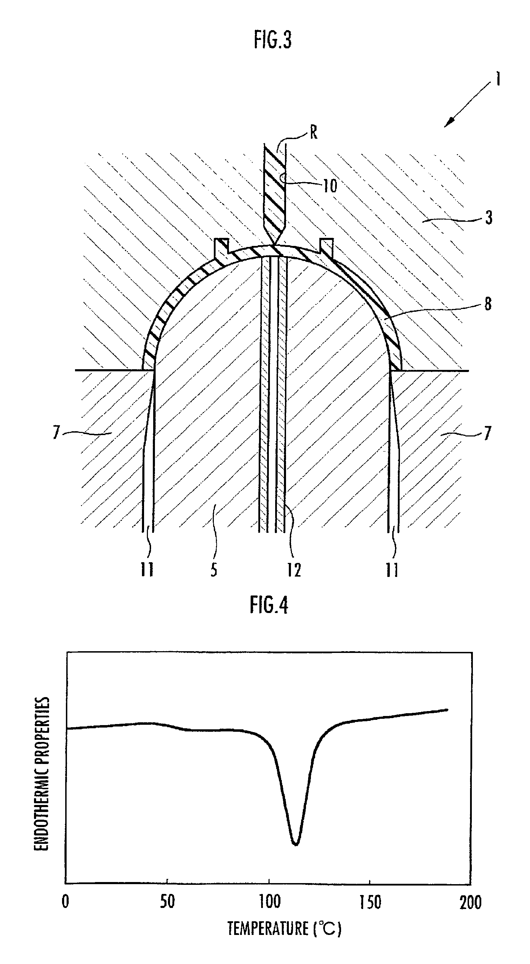

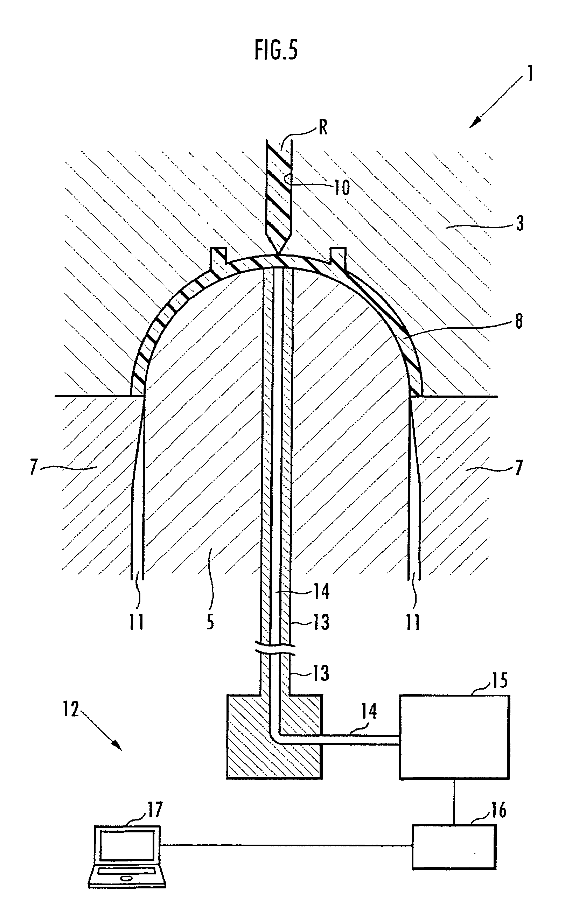

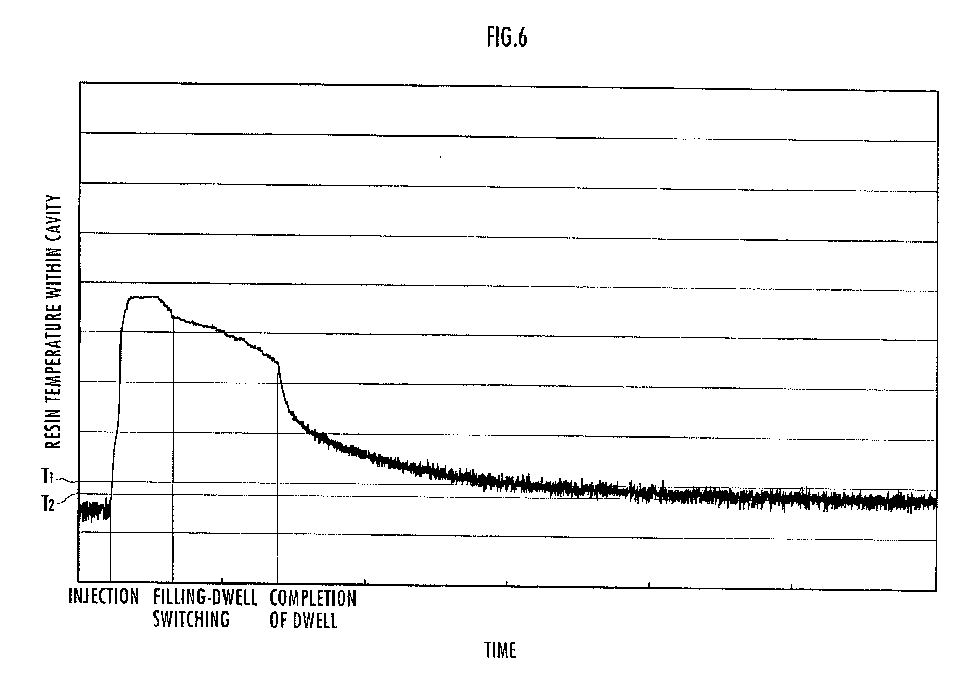

Next, an embodiment of the present invention will be described in further detail by referring to the accompanying drawings. Figures 1(a) and 1(b) are a perspective view and a sectional view, respectively, of a hollow article in this embodiment. Figures 2, 3, 7 and 8 are explanatory sectional views that show the manufacturing process of this embodiment. Figure 4 is a graph that shows the endothermic properties of a polylactic acid containing resin used in this embodiment. Figure 5 is a system configuration diagram that shows the construction of an infrared temperature sensor. Figure 6 is a graph that shows changes with time in the temperature of a polylactic acid containing resin within a cavity measured by the infrared temperature sensor shown in Figure 5.

In this embodiment, a description will be given of a case where a bowl A, which is shown in Figures 1(a) and 1(b), is manufactured as a heat-resistant hollow article by the injection molding of a polylactic acid containing resin.

Figure 1(a) is a perspective view of the bowl A and Figure 1(b) is a sectional view taken along the line I-I of Figure 1(a). As shown in Figures 1(a) and 1(b), the bowl A has a bottom portion a and a peripheral wall portion b that is continuous with the bottom portion a and rises from the bottom portion a. The bowl A is provided, in the bottom portion a thereof, with an annular leg portion c that protrudes outward.

The bowl A is manufactured by using a mold 1 shown in Figure 2. As shown in Figure 2, the mold 1 used in the production process of this embodiment comprises a female mold portion 3 having a concavity 2 of a shape fitting the outer shape of the bowl A, a male mold portion 5 having a convexity 4 fitting the inner shape of the bowl A and opposed to the concavity 2, and a stripper plate 7 which is arranged along the periphery of the male mold portion 5 and has an edge-forming part 6 having a shape fitting an edge of the bowl A. In the mold 1, a cavity 8 enclosed by the concavity 2, the convexity 4 and the edge-forming part 6 is formed. Incidentally, the reference numeral 2a denotes a convexity for forming an annular protrusion that is provided in the bottom portion of the bowl A and serves as the leg portion c.

In the mold 1, the female mold portion 3 is a fixed mold portion and the male mold portion 5 and the stripper plate 7 provide movable mold portions. The female mold portion 3 has a runner 10 that communicates with the cavity 8 via a gate 9. Between the male mold portion 5 and the stripper plate 7, there is formed a compressed air introduction passage 11 that ejects compressed air along the periphery of the male mold portion 5. And in the convexity 4 of the male mold portion 5, there is disposed an infrared temperature sensor 12 in a position facing the cavity 8.

In the production process of this embodiment, first, the female mold portion 3, the male mold portion 5 and the stripper plate 7 are heated by use of unillustrated heating means to ensure that the temperature of the surfaces of the concavity 2, convexity 4 and edge-forming part 6 that form the cavity 8 becomes temperatures in the range of 100 to 120 °C, for example, 110 °C. And as shown in Figure 3, a polylactic acid containing resin R in a molten state is injected into the cavity 8 via the runner 10.

Biodegradable resin compositions that contain not less than 50% polylactic acid by mass and are nanocomposites of an inorganic filler are used as the polylactic acid containing resin R. Examples of such polylactic acid containing resin R include TERRAMAC (trade name) made by UNITIKA LTD.

As shown in Figure 4, the polylactic acid containing resin R (TERRAMAC (trade name) made by UNITIKA LTD.) has a peak of endothermic properties in the range of 100 to 120 °C. Therefore, the polylactic acid containing resin R is crystallized when the temperature thereof is kept in the above-described range during the cooling and solidification in the cavity 8.

Next, when the bowl A has been formed by the solidification of the injected polylactic acid containing resin R, the mold 1 is opened by moving the male mold portion 5 and the stripper plate 7 in the direction in which the male mold portion and the stripper plate are spaced from the female mold portion 3. In this embodiment, by tracking changes with time in the temperature of the polylactic acid containing resin R within the cavity 8 by use of the infrared temperature sensor 12, judgment is passed on the solidification of the polylactic acid containing resin R and the formation of the bowl A. As a result of this, the mold 1 can be opened as described above when the temperature of the polylactic acid containing resin R has become a temperature in an appropriate range.

As shown in Figure 5, the infrared temperature sensor 12 has an optical fiber 14 disposed in a steel sleeve 13 made of quenched steel, and the optical fiber 14 is constructed in such a manner that one end portion thereof is exposed to the interior of the cavity 8 and an infrared oscillator/receiver 15 is connected to the other end portion thereof. And the infrared oscillator/receiver 15 is connected to a temperature sensor 16, and the temperature sensor 16 in turn is connected to display means 17, such as a personal computer.

The infrared temperature sensor 12 is such that infrared rays generated by the polylactic acid containing resin R injected into the cavity 8 are received by the infrared oscillator/receiver 15 via the optical fiber 14 and by performing prescribed arithmetic process, the temperature of the polylactic acid containing resin R is detected by the temperature detector 16 from the quantity of energy that the infrared rays have. The temperature of the polylactic acid containing resin R detected by the temperature detector 16 is displayed by the display means 17. Figure 6 shows an example of changes with time in the temperature of the polylactic acid containing resin R within the cavity 8 measured by the infrared temperature sensor 12.

As shown in Figure 6, the temperature of the polylactic acid containing resin R within the cavity 8 is highest immediately after injection and drops gently from filling-dwell switching to the completion of dwell. Immediately after the completion of dwell, the temperature of the polylactic acid containing resin R drops temporarily steeply, but after that, the temperature drops gently again. Figure 6 shows how the temperature of the polylactic acid containing resin R within the cavity 8 becomes the temperature T₁ at which heat resistance exhibits itself in the polylactic acid containing resin R and how the temperature of the polylactic acid containing resin R within the cavity 8 drops further and becomes the temperature T₂ at which the bowl A cannot be released from the mold. From Figure 6, it is apparent that the difference between the temperature T₁ and the temperature T₂ is very small and that it is difficult to appropriately grasp an appropriate temperature range for opening the mold 1 when indirect measurements from the temperature of the mold 1 are made.

Because the infrared temperature sensor 12 is used in this embodiment, it is possible to judge that the polylactic acid containing resin R within the cavity 8 has been solidified and that the bowl A has been formed when the temperature of the polylactic acid containing resin R within cavity 8 is an appropriate range within the range between the temperature T₁ and the temperature T₂ and hence the mold 1 can be opened as described above.

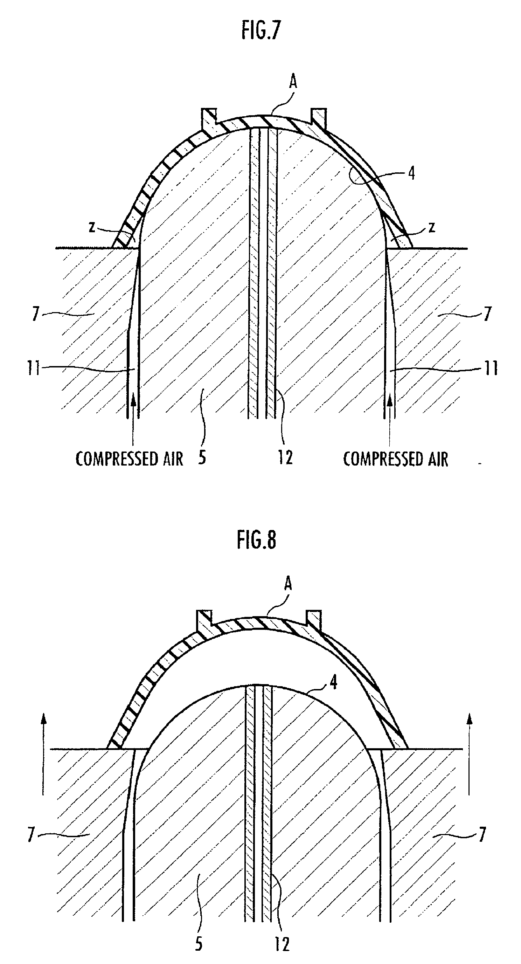

However, when the mold 1 is opened by moving the male mold portion 5 and the stripper plate 7 in the direction in which the male mold portion 5 and the stripper plate 7 are spaced from the female mold portion 3, the polylactic acid containing resin R has been contracted in association with solidification. Therefore, the bowl A adheres to the mold although mold release is not impossible. As a result of this, as shown in Figure 7, the bowl A cannot be easily released from the male mold portion 5 although the bowl A is easily released from the female mold portion 3, and the bowl A is released from the female mold portion 3 while adhering to the male mold portion 5.

If the bowl A remains adhering to the male mold portion 5, the bowl A will adhere to the male mold portion 5 more and more strongly as the above-described contraction proceeds. Therefore, next, by introducing compressed air from the compressed air introduction passage 11 into between the inner surface of the solidified bowl A and the convexity 4 of the male mold portion 4, whereby the inner surface of the solidified bowl A is released from the convexity 4. The compressed air introduction passage may open along the full circumference of the peripheral edge of the male mold portion or may also open partially in several places at the peripheral edge of the male mold portion. As a result of this, a clearance Z is formed between the bowl A and the convexity 4 and the bowl A rises a little from the convexity 4. However, the bowl A still remains unremoved from the convexity 4.

Therefore, next, as shown in Figure 8, the bowl A is taken out of the mold 1 by advancing the stripper plate 7 in the direction of the bowl A. The bowl A has been released from the convexity 4 as described above, and the stripper plate 7 lifts the edge of the bowl A by use of the edge-forming part 6 that abuts against this edge. Therefore, it is possible to easily take out the bowl A from the male mold portion 5.

Because the bowl A obtained by the production process of this embodiment is made of the crystallized polylactic acid containing resin R, the bowl A has heat resistance and can be used as a container for food heated by hot water pouring and by a microwave oven. Because the bowl A has heat resistance, it is possible to perform cleaning, drying and sterilization treatment at high temperatures, and the bowl A can be used as what is called returnable containers that are recovered after use and can be reused.

In this embodiment, the description was given of a case where the bowl A is manufactured as the above-described hollow article. The above-described hollow article may be of any kind so long as it is a hollow article capable of being molded by injection molding, for example, tableware, such as bowls and cups, cosmetic containers, such as lipstick containers, chemicals containers, caps of containers, beverage bottles (except PET bottles formed by blow molding), sealable containers, such as Tupperware (trade name), food packing containers for microwave oven, and heat-resistant containers for electronic device.

In this embodiment, the description was given of the bowl A having the annular foot-portion c. However, a bowl A having no foot-portion c may also be used.

In this embodiment, the infrared temperature sensor 12 is disposed in the convexity 4 of the male mold portion 5. However, in addition to the convexity 4 of the male mold portion 5, the infrared temperature sensor 12 may also be disposed in a plurality of portions selected from the concavity 2 of the female mold portion 3, portions around the gate 9 where the temperature of the polylactic acid containing resin R is detectable, the portion that is filled with the polylactic acid containing resin R in a molten state at the last moment, and the portion of the convexity 4 of the male mold portion 5 to which the bowl A adheres most strongly (for example, the vicinity of the opening edge of the bowl A)

## Claims

1. A process for production of a heat-resistant hollow article made of a polylactic acid containing resin (R) molded by injecting the polylactic acid containing resin (R) in the form of a biodegradable resin composition that contains not less than 50% polylactic acid by mass and is a nanocomposite of an inorganic filler and has a crystallization temperature in the range of 100 to 120°C into a mold, the mold comprises a female mold portion (3) having a concavity of a shape fitting the outer shape of the hollow article, a male mold portion (5) having a convexity fitting the inner shape of the hollow article and opposed to the concavity, and a stripper plate (7) which is arranged along the periphery of the male mold portion (5) and has an edge-forming part (6) having a shape fitting an edge of the hollow article, and in which mold a cavity (8) enclosed by the concavity, the convexity and the edge-forming part (6) is formed, the process comprising the steps of:
heating the mold in such a manner that a surface of the mold facing the cavity (8) reaches the crystallization temperature of the polylactic acid containing resin (R);
injecting the polylactic acid containing resin (R) in a molten state into the cavity (8) of the mold heated to the crystallization temperature via a gate (9) disposed in the mold;
measuring a temperature of the polylactic acid containing resin (R) injected into the cavity (8) by use of an infrared temperature sensor (12) provided in a position facing the cavity (8);
releasing the hollow article from the convexity by moving the male mold portion (5) and the stripper plate (7) in the direction in which the male mold portion (5) and the stripper plate (7) are spaced from the female mold portion (3) when the temperature of the polylactic acid containing resin (R) is in a temperature range and by introducing gas into between an inner surface of the solidified hollow article and the convexity of the male mold portion (5), wherein the temperature range lies between the temperature (T₁) at which heat resistance exhibits itself in the hollow article and the temperature (T₂) at which the hollow article cannot be released from the mold; and
taking out the hollow article from the mold by advancing the stripper plate (7) in the direction of the hollow article.

2. The process according to claim 1, wherein the infrared temperature sensor (12) receives infrared rays generated by a polylactic acid containing resin (R) injected into the cavity (8) by use of an infrared receiver (15) via an optical fiber (14) and detects the temperature of the resin from the quantity of energy that the infrared rays have.

3. The process according to claim 1 or 2, wherein the infrared temperature sensor (12) is provided at a position facing the cavity (8) in one or more parts selected from a part that forms the convexity of the male mold portion (5), a part that forms the concavity of the female mold portion (3), a part capable of detecting the temperature of the polylactic acid containing resin (R) located in the gate (9), a part that is finally filled with the polylactic acid containing resin (R) in a molten state, and a part of the convexity of the cavity (8) to which the hollow article adheres.

4. The process according to any one of claims 1 to 3, wherein an inner surface of the solidified hollow article is released from the convexity of the male mold portion (5) by injecting compressed air into between the inner surface of the hollow article and the convexity.

## Patentansprüche

1. Ein Verfahren zur Herstellung eines wärmebeständigen Hohlkörpers aus einem Polymilchsäure-enthaltenden Harz (R), der durch Einspritzen des Polymilchsäure-enthaltenden Harzes (R) in der Form einer biologisch abbaubaren Harzkomposition, welche nicht weniger als 50 Massenprozent Polymilchsäure enthält und ein Nanokomposit aus einem inorganischen Füllstoff ist und eine Kristallisationstemperatur in dem Bereich von 100 bis 120°C besitzt, in ein Formwerkzeug geformt wird, wobei das Formwerkzeug einen weiblichen Formabschnitt (3) mit einer Konkavität einer Form, welche der Außenform des Hohlkörpers angepasst ist, einen männlichen Formabschnitt (5) mit einer Konvexität, die der Innenform des Hohlkörpers angepasst ist und der Konkavität gegenüberliegt, und eine Abziehplatte (7), die entlang der Peripherie des männlichen Formabschnitts (5) angeordnet ist und einen Randbildungsteil (6) besitzt, der eine Form aufweist, die einem Rand des Hohlkörpers angepasst ist, aufweist, und wobei in dem Formwerkzeug eine Kavität (8) gebildet ist, die von der Konkavität, der Konvexität und dem Randbildungsteil (6) umschlossen ist, wobei das Verfahren die folgenden Schritte aufweist:
Erwärmen des Formwerkzeugs auf eine solche Weise, dass eine Oberfläche des Formwerkzeugs, die der Kavität (8) zugewandt ist, die Kristallisationstemperatur des Polymilchsäure-enthaltenden Harzes (R) erreicht,
Einspritzen des Polymilchsäure-enthaltenden Harzes (R) in einem Schmelzzustand in die Kavität (8) des auf die Kristallisationstemperatur erwärmten Formwerkzeugs durch einen Anguss (9), der in dem Formwerkzeug angeordnet ist,
Messen einer Temperatur des Polymilchsäure-enthaltenden Harzes (R), das in die Kavität (8) eingespritzt wurde, unter Verwendung eines Infrarot-Temperatursensors (12), der in eine der Kavität (8) zugewandten Position vorgesehen ist,
Freisetzen des Hohlkörpers von der Konvexität durch Bewegen des männlichen Formabschnitts (5) und der Abziehplatte (7) in der Richtung, in welcher der männliche Formabschnitt (5) und die Abziehplatte (7) von dem weiblichen Formabschnitt (3) beabstandet sind, wenn die Temperatur des Polymilchsäure-enthaltenden Harzes (R) in einem Temperaturbereich ist, sowie durch Einbringen von Gas in einen Bereich zwischen einer Innenfläche des verfestigten Hohlkörpers und der Konvexität des männlichen Formabschnitts (5), wobei der Temperaturbereich zwischen der Temperatur (T₁), bei der sich ein Wärmewiderstand in dem Hohlkörper zeigt, und der Temperatur (T₂), bei der der Hohlkörper nicht aus dem Formwerkzeug freigesetzt werden kann, liegt, und
Herausnehmen des Hohlkörpers aus dem Formwerkzeug durch Bewegen der Abziehplatte (7) in der Richtung des Hohlkörpers.

2. Das Verfahren gemäß Anspruch 1, wobei der Infrarot-Temperatursensor (12) Infrarotstrahlen empfängt, die durch ein in die Kavität (8) eingespritzes Polymilchsäureenthaltendes Harz (R) erzeugt werden, unter Verwendung eines Infrarot-Empfängers (15) über eine optische Faser (14), und er die Temperatur des Harzes aus der Energiemenge der Infrarotstrahlen erfasst.

3. Das Verfahren gemäß Anspruch 1 oder 2, wobei der Infrarot-Temperatursensor (12) an einer Position vorgesehen ist, die der Kavität (8) zugewandt ist, in einem oder mehreren Teil(en), der bzw. die ausgewählt ist/sind aus einem Teil, der die Konvexität des männlichen Formabschnitts (5) bildet, einem Teil, der die Konkavität des weiblichen Formabschnitts (3) bildet, einem Teil, der die Temperatur des Polymilchsäure-enthaltenden Harzes (R), welches sich in dem Anguss (9) befindet, erfassen kann, einem Teil, der zuletzt mit dem Polymilchsäure-enthaltenden Harz (R) in einem Schmelzzustand befüllt wird, und einem Teil der Konvexität der Kavität (8), an dem der Hohlkörper anhaftet.

4. Das Verfahren gemäß einem der Ansprüche 1 bis 3, wobei eine Innenfläche des verfestigten Hohlkörpers von der Konvexität des männlichen Formabschnitts (5) freigesetzt wird, indem komprimierte Luft in den Bereich zwischen der Innenfläche des Hohlkörpers und der Konvexität eingeblasen wird.

## Revendications

1. Procédé de production d'un article creux résistant à la chaleur, composé d'une résine (R) contenant un acide polylactique, moulé par l'injection de la résine (R) contenant un acide polylactique sous la forme d'une composition de résine biodégradable qui contient au moins 50 % en masse d'acide polylactique et est un nanocomposite d'une charge inorganique et possède une température de cristallisation située dans la plage allant de 100 °C à 120 °C dans un moule, le moule comprenant une partie de moule négatif (3) possédant une concavité de forme s'adaptant à la forme externe de l'article creux, une partie de moule positif (5) possédant une convexité s'adaptant à la forme interne de l'article creux et opposée à la concavité et une plaque de dévêtissage (7) qui est agencée le long de la périphérie de la partie de moule positif (5) et possède une partie formant bord (6) possédant une forme s'adaptant à un bord de l'article creux, et dans ledit moule une cavité (8) entourée par la concavité, la convexité et la partie formant bord (6) étant formée, le procédé comprenant les étapes suivantes :
le chauffage du moule de sorte qu'une surface du moule se trouvant en face de la cavité (8) atteigne la température de cristallisation de la résine (R) contenant un acide polylactique ;
l'injection de la résine (R) contenant un acide polylactique dans un état fondu dans la cavité (8) du moule chauffé à la température de cristallisation par l'intermédiaire d'une entrée (9) disposée dans le moule ;
la mesure d'une température de la résine (R) contenant un acide polylactique injectée dans la cavité (8) au moyen d'un capteur de température à infrarouge (12) placé à une position faisant face de la cavité (8) ;
la libération de l'article creux de la convexité en déplaçant la partie de moule positif (5) et la plaque de dévêtissage (7) dans la direction dans laquelle la partie de moule positif (5) et la plaque de dévêtissage (7) sont espacées de la partie de moule négatif (3) quand la température de la résine (R) contenant un acide polylactique se situe dans une plage de températures et en introduisant un gaz entre la surface interne de l'article creux solidifié et la convexité de la partie de moule positif (5), dans lequel la plage de températures va de la température (T₁) à laquelle la résistance à la chaleur se manifeste dans l'article creux à la température (T₂) à laquelle l'article creux ne peut pas être libéré du moule ; et
le retrait de l'article creux du moule en avançant la plaque de dévêtissage (7) dans la direction de l'article creux.

2. Procédé selon la revendication 1, dans lequel le capteur de température à infrarouge (12) reçoit des rayonnements infrarouges générés par une résine (R) contenant un acide polylactique injectée dans la cavité (8) au moyen d'un récepteur d'infrarouge (15) par l'intermédiaire d'une fibre optique (14) et détecte la température de la résine à partir de la quantité d'énergie que les rayonnements infrarouges possèdent.

3. Procédé selon la revendication 1 ou 2, dans lequel le capteur de température à infrarouge (12) est placé à une position faisant face à la cavité (8) dans une ou plusieurs parties choisies parmi une partie formant la convexité de la partie de moule positif (5), une partie formant la concavité de la partie de moule négatif (3), une partie capable de détecter la température de la résine (R) contenant un acide polylactique située dans l'entrée (9), une partie qui est finalement remplie avec la résine (R) contenant un acide polylactique dans un état fondu et une partie de la convexité de la cavité (8) à laquelle l'article creux adhère.

4. Procédé selon l'une quelconque des revendications 1 à 3, dans lequel une surface interne de l'article creux solidifié est libérée de la convexité de la partie de moule positif (5) en injectant de l'air comprimé entre la surface interne de l'article creux et la convexité.
